# EUROPÄISCHE PATENTSCHRIFT

(11) **EP 0 698 471 B1**
(45) Veröffentlichungstag und Bekanntmachung des Hinweises auf die Patenterteilung: **07.11.2001**
(21) Anmeldenummer: 95112533.5
(22) Anmeldetag: 09.08.1995
(51) Int. Cl.: B29C 47/20, B29C 47/88

(54) **Strangpresswerkzeugkopf**
Extrusion die
Filière d'extrusion

(30) Priorität: 12.08.1994 AT 157694
(43) Veröffentlichungstag der Anmeldung: 28.02.1996
(73) Patentinhaber: Grösswang, Heinz, 4600 Wels (AT)
(72) Erfinder: Grösswang, Heinz, 4600 Wels (AT)

(56) Entgegenhaltungen:
- EP-A- 0 418 760
- DE-A- 2 455 779
- DE-A- 3 241 005
- FR-A- 2 243 071
- FR-A- 2 512 391
- US-A- 3 357 051

## Beschreibung

Die Erfindung bezieht sich auf einen Strangpreßwerkzeugkopf zur Extrusion von Hohlprofilen aus Kunststoff oder anderem Material nach dem Oberbegriff des Anspruchs 1.

Um das Kunststoff-Hohlprofil abzukühlen, ist nach der Kalibriervorrichtung einer Extruderanlage, im allgemeinen eine Außenkühlung, mit Kühlwasser vorgesehen. Auch ist eine teilweise Innenkühlung mit abgekühlter Luft bekannt. Um die Extrusionsgeschwindigkeit zu erhöhen, müssen bei einer solchen Extruderanlage die Kalibriervorrichtungen und die Außenkühlung immer länger ausgebildet werden, was mit einem entsprechend höheren Aufwand an Kosten und Platz verbunden ist.

Aus EP-A-O 419 760 ist bereits ein Strangpreßwerkzeugkopf bekannt. Dabei strömt die Flüssigkeit von der Düse zu der am Dornumfang vorgesehenen Absaugöffnung.

Aus DE 34 14 029 A1 ist es bekannt, beim Folienblasen oder der Rohrextrusion einen Wassernebel in das Innere des Extrudats zu blasen.

Die DE 24 55 779 A1 zeigt einen Strangpreßwerkzeugkopf nach dem Oberbegriff von Anspruch 1.

Aufgabe der Erfindung ist es, eine wesentliche Steigerung der Produktionsgeschwindigkeit beim Extrudieren sowie eine Verkürzung der Baulänge einer Extruderanlage und damit eine Senkung des Kosten- und Platzaufwandes zu ermöglichen.

Dies wird erfindungsgemäß mit dem im Anspruch 1 gekennzeichneten Strangpreßwerkzeugkopf erreicht.

Erfindungsgemäß wird also bei der Extrusion des Hohlprofiles aus Kunststoff oder einem anderen Material in den Hohlraum des Hohlprofils bzw. bei einem Hohlprofil mit mehreren Hohlräumen in jeden Hohlraum des Hohlprofils eine Flüssigkeit gesprüht. Durch den Kontrakt mit der heißen Innenwand des Profils verdampft die Flüssigkeit und senkt durch ihre Verdampfungswärme wesentlich die Temperatur des eingespritzten Kunststoffes oder anderen Materials.

Der in dem Hohlraum bzw. den Hohlräumen des Hohlprofils entstehende Dampf wird über Öffnungen an der vorderen, also vom Strangpreßwerkzeugkopf abgewandten Stirnseite des Dornes mit einer geeigneten Vakuumpumpe abgesaugt. Der Dampf würde nämlich ohne eine solche Absaugung mit zunehmendem Abstand vom Strangpreßwerkzeugkopf in dem Hohlprofil kondensieren, wodurch eine der Verdampfungswärme entsprechende Kondensationswärme gebildet und das Hohlprofil im Innern wieder entsprechend aufgeheizt würde.

Eine Vakuumpumpe ist bei einer Extruderanlage meist ohnehin vorhanden, beispielsweise für die Kalibriervorrichtung, die Vakuumanschlüsse aufweist, um das Profil an die Kaliberwand zu saugen.

Die Kontrolle, daß die abgesaugte Menge von Dampf auch der durch das Einsprühen von Flüssigkeit entstandenen Menge entspricht, erfolgt über ein Manometer, das an die Absaugleitung angeschlossen ist.

Ein minimaler Unterdruck beim Absaugen garantiert, daß auch etwas Frischluft vom Ende des Profils mitangesaugt wird. Eine nicht vollständige Absaugung würde im Innern des Profils nämlich für unerwünschten Überdruck sorgen und damit zu unkontrollierbaren Änderungen des Profils führen. Durch das Absaugen des Dampfes in entgegengesetzter Richtung zur eingespritzten Flüssigkeit bzw. Extrusion wird ein großer Teil der Wärme des teils noch teigigen Extrusionsmaterials schon am Beginn des Extrusionsvorgangs wieder abtransportiert und angestrebte Erstarrungsvorgang wesentlich beschleunigt.

Als Flüssigkeit wird vorzugsweise Wasser verwendet, vor allem auch deshalb, weil Wasser eine sehr hohe Verdampfungswärme von 2.257 J/g bei Atmosphärendruck aufweist. Die Flüssigkeit bzw. das Wasser kann auch im Gemisch mit einem Gas, beispielsweise Luft, aus der Düse in den Hohlraum oder die Hohlräume des Hohlprofils eingespritzt werden.

Der erfindungsgemäße Strangpreßwerkzeugkopf ist insbesondere zur Extrusion von Hohlprofilen aus PVC geeignet; so konnte mit dem erfindungsgemäßen Strangpreßwerkzeugkopf eine Produktionssteigerung um etwa 100% (!) gegenüber einer herkömmlichen Extruderanlage erreicht werden.

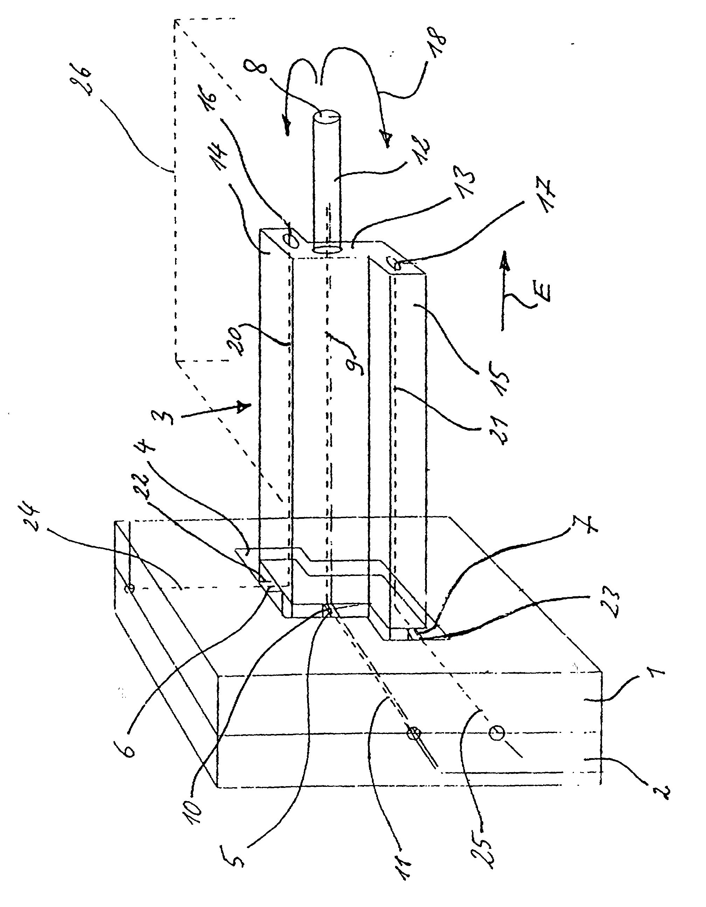

Anliegend ist eine Ausführungsform der Erfindung anhand der Zeichnung näher erläutert, deren einzige Figur schematisch in perspektivischer Wiedergabe einen Strangpreßwerkzeugkopf zeigt.

Der Strangpreßwerkzeugkopf weist eine Dornhalteplatte 1 und eine Spitzplatte 2 auf. In der Extrusionsöffnung 4 der Dornhalteplatte 1 ist ein Dorn 3 angeordnet, so daß zwischen der Dornhalteplatte 1 und dem Dorn 3 ein Ringspalt gebildet wird, durch den die nicht dargestellte teigige Kunststoffmasse aus dem Extruder in Form des Hohlprofils austritt.

Der Dorn 3 ist mit Torpedostegen 5, 6, 7 in der Extrusionsöffnung 4 fixiert. An dem in Extrusionsrichtung E vorderen Ende des Dornes 3 ist eine Spritzdüse 8 angeordnet, mit der eine Flüssigkeit, vorzugsweise Wasser oder ein Flüssigkeit-Gas-Gemisch, vorzugsweise ein Wasser-Luft-Gemisch, in den Hohlraum des Hohlprofils in möglichst fein zerstäubter Form gespritzt wird.

Die Leitung zu den Düse 8 wird durch eine Bohrung gebildet, deren erster Abschnitt 9 sich durch den Dorn 3 bis zu dem Torpedosteg 5 erstreckt, von wo der zweite Abschnitt 10 durch den Torpedosteg 5 hindurch zu dem dritten Abschnitt 11 in der Kontaktfläche zwischen Dornhalteplatte 1 und Spitzplatte 2 führt.

Durch die Bohrung 9, 10, 11 erstreckt sich ein Rohr 12 aus einem wärmeisolierenden Material, um zu verhindern, daß die Flüssigkeit bzw. das Wasser auf dem Weg zu der Düse 8 zu stark erhitzt wird.

Das Rohr 12 erstreckt sich als Stutzen von der vorderen Stirnfläche des Dornes 3 nach vorne bis zu der Düsenöffnung 8. Das heißt, die Düse 8 ist im Abstand von der Stirnfläche des Dornes 3 angeordnet.

Das in der Zeichnung dargestellte Spritzwerkzeug weist einen Dorn 3 auf, der im Querschnitt als Steg 13 mit zwei. davon rechtwinklig in die eine bzw. andere Richtung abstehenden Schenkeln 14, 15 ausgebildet ist. Die Bohrung 9 in dem Dorn 3 und die Düse 8 sind in der Mittellängsachse des Dornes 3, also in der Mitte des Steges 13 angeordnet.

Die über die Düse 8 in den Hohlraum des Hohlprofils gespritzte Flüssigkeit bzw. Wasser verdampft an der heißen Innenwand des aus dem Extruder austretenden Hohlprofils. Um den gebildeten Dampf abzusaugen, sind an dem einen bzw. anderen Schenkel 14, 15 an der vorderen Seite des Dorns 3 Öffnungen 16, 17 vorgesehen, über die der gebildete Dampf, wie durch die Pfeile 18 veranschaulicht, im Gegenstrom zu dem sich in Extrusionsrichtung E bewegenden Hohlprofil abgesaugt wird.

Die Saugöffnungen 16, 17 sind über Bohrungen mit einer nicht dargestellten Vakuumpumpe verbunden. Jede Bohrung der Saugleitung besteht dabei aus einem ersten Abschnitt 20 bzw. 21, der sich von der Saugöffnung 16 bzw. 17 durch den Dorn 3 bis zu dem Torpedosteg 6 bzw. 7 erstreckt, von wo der zweite Abschnitt 22 bzw. 23 durch den Torpedosteg 6 bzw. 7 hindurch und mit einem dritten Abschnitt 24 bzw. 25 in der Kontaktfläche zwischen Dornhalteplatte 21 und Spitzplatte 2 zu der Vakuumpumpe führt. In den Saugleitungen kann ein Rohr aus einem wärmeisolierenden Material vorgesehen sein.

Zur Zufuhr eines Flüssigkeit-Gas-Gemischs zur Düse 8 kann das Rohr 12 als Koaxialrohr ausgebildet sein, wobei durch das Innenrohr beispielsweise das Gas und durch den Raum zwischen Innenrohr und Außenrohr des Koaxialrohres die Flüssigkeit zur Düse 8 strömt.

Der Dorn 3 und die Öffnung 4 können auch einen beliebigen anderen Querschnitt aufweisen, beispielsweise einen anderen rechteckigen Querschnitt oder prismatisch oder rund ausgebildet sein. Auch ist es möglich, den Dorn so auszubilden, daß ein Hohlprofil mit mehreren Hohlräumen gebildet wird. In diesem Fall ist für jeden Hohlraum wenigstens eine Flüssigkeitseinspritzdüse 8 und wenigstens eine Saugöffnung 16 bzw. 17 vorhanden.

Der Dorn 3 kann sich in das Innere der in der Zeichnung gestrichelt angedeuteten Kalibrierungsvorrichtung 26 erstrecken.

## Patentansprüche

1. Strangpreßwerkzeugkopf zur Extrusion von Hohlprofilen aus Kunststoff oder anderem Material mit einem Dorn (3), wobei in Extrusionsrichtung im Abstand vom stirnseitigen Dornende eine Düse (8) zum Einspritzen einer Flüssigkeit oder eines Flüssigkeit-Gas-Gemisches in jeden Hohlraum vorgesehen ist und der Dorn (3) wenigstens eine Absaugöffnung (16, 17) für die nach dem Einspritzen in jeden Hohlraum über die Düse (8) verdampfte Flüssigkeit aufweist, **dadurch gekennzeichnet, daß** die Absaugöffnung (16, 17) zum Absaugen des Dampfes und der vom Ende des Hohlprofiles mitansaugbaren Frischluft an der von dem Strangpreßwerkzeugkopf abgewandten Stirnseite des Dornes (3) angeordnet und an eine Vakuumpumpe angeschlossen ist.

2. Strangpreßwerkzeugkopf nach Anspruch 1, **dadurch gekennzeichnet, daß** zum Einspritzen eines Flüssigkeit-Gas-Gemisches sich zu der Düse (8) ein koaxiales Rohr durch eine Leitung erstreckt, wobei entweder das Gas innerhalb des Rohres und die Flüssigkeit in der Leitung außerhalb des Rohres oder die Flüssigkeit innerhalb des Rohres und das Gas in der Leitung außerhalb des Rohres der Düse (8) zugeführt werden.

3. Strangpreßwerkzeugkopf nach Anspruch 1 oder 2, **dadurch gekennzeichnet, daß** die Saugleitung mit einem Manometer zum kontrollierten Absaugen der verdampften Flüssigkeit versehen ist.

4. Strangpreßwerkzeugkopf nach einem der vorstehenden Ansprüche, **dadurch gekennzeichnet, daß** die Leitung zur Düse (8) zum Einspritzen der Flüssigkeit und/oder die Saugleitung zum Absaugen der verdampften Flüssigkeit sich durch die Torpedostege (5, 6, 7) erstrecken, mit denen der Dorn (3) an dem Strangpreßwerkzeugkopf befestigt ist.

5. Strangpreßwerkzeugkopf nach einem der vorstehenden Ansprüche, **dadurch gekennzeichnet, daß** die Leitung zum Einspritzen der Flüssigkeit und/oder die Saugleitung sich durch eine Bohrung (9 bis 11, 21 bis 25) in dem Dorn (3) und/oder den Torpedostegen (5, 6, 7) und/oder dem Strangpreßwerkzeugkopf erstrecken.

6. Strangpreßwerkzeugkopf nach einem der vorstehenden Ansprüche, **dadurch gekennzeichnet, daß** sich der Dorn (3) in die Kalibriervorrichtung (26) der Extruderanlage erstreckt.

## Claims

1. Extrusion die to extrude hollow sections of plastic or other material by means of a mandrel (3), with a nozzle (8) for the injection of a liquid or a liquid-gas mixture into each cavity provided in extrusion direction at a distance from the front-side mandrel end, and with the mandrel (3) being equipped with at least one suction orifice (16, 17) for the liquid evaporating via the nozzle (8) after injection into each cavitiy, **characterized in that** the suction orifice (16, 17) for sucking off the vapour and the fresh air sucked along at the end of the hollow section is arranged at the front side of the mandrel (3) averted from the extrusion die and is connected to a vacuum pump.

2. Extrusion die according to Claim 1, **characterized in that**, for the injection of a liquid-gas mixture, there is a tube extending through a pipeline coaxial to the nozzle (8), with either the gas being supplied to the nozzle (8) within the tube and the liquid in the line without the tube or the liquid within the tube and the gas in the line without the tube.

3. Extrusion die according to Claim 1 or 2, **characterized in that** the suction line is provided with a pressure gauge to achieve a controlled suction of the evaporating liquid.

4. Extrusion die according to one of the above Claims, **characterized in that** the line to the nozzle (8) for injecting the liquid and/or the suction line for sucking off the evaporating liquid extend through the torpedo webs (5, 6, 7) via which the mandrel (3) is fastened at the extrusion die.

5. Extrusion die according to one of the above Claims, **characterized in that** the line for injecting the liquid and/or the suction line extend through a bore (9 to 11, 21 to 25) in the mandrel (3) and/or the torpedo webs (5, 6, 7) and/or the extrusion die.

6. Extrusion die according to one of the above Claims, **characterized in that** the mandrel (3) extends into the calibrating device (26) of the extrusion plant.

## Revendications

1. Filière d'extrusion pour l'extrusion de profils creux en matière plastique ou en tout autre matériau avec un support de filière (3), une tuyère (8) dans le sens d'extrusion et à écart de l'extrémité frontale du support de filière étant prévue pour injecter un liquide ou un mélange de liquides-gaz dans chaque cavité et le support de filière (3) possédant au moins un orifice d'extraction (16, 17) pour le liquide évaporé par le biais de la tuyère (8) après l'injection dans chaque cavité, **caractérisée par le fait que** l'orifice d'extraction (16, 17) destiné à l'extraction de la vapeur et de l'air frais pouvant être aspiré simultanément depuis l'extrémité du profil creux est monté sur la face du support de filière (3) opposée à la filière d'extrusion et qu'il est raccordé à une pompe à vide.

2. Filière d'extrusion selon revendication 1, **caractérisée par le fait que** pour l'injection d'un mélange de liquides-gaz un tube coaxial s'étend à travers une conduite vers la tuyère (8), soit en conduisant le gaz à l'intérieur du tube et le liquide dans la conduite vers l'extérieur du tube ou le liquide à l'intérieur du tube et le gaz dans la conduite vers l'extérieur de tube de la tuyère (8).

3. Filière d'extrusion selon revendication 1 ou 2, **caractérisée par le fait que** la conduite d'aspiration est équipée d'un manomètre pour l'extraction contrôlée du liquide évaporé.

4. Filière d'extrusion selon une des revendications citées au préalable, **caractérisée par le fait que** la conduite vers la tuyère (8) pour injecter le liquide et/ou la conduite d'aspiration pour extraire le liquide évaporé s'étendent à travers les âmes de torpille (5, 6, 7) au moyen desquels le support de filière (3) est fixé à la filière d'extrusion.

5. Filière d'extrusion selon une des revendications citées au préalable, **caractérisée par le fait que** la conduite pour injecter le liquide et/ou la conduite d'aspiration s'étendent à travers un alésage (9 à 11, 21 à 25) dans le support de filière (3) et/ou dans les âmes de torpille (5, 6, 7) et/ou dans la filière d'extrusion.

6. Filière d'extrusion selon une des revendications citées au préalable, **caractérisée par le fait que** le support de filière (3) s'étend dans le dispositif de calibrage (26) de l'extrudeuse.
